Europäisches Patentamt

European Patent Office

Office européen des brevets

(19)

(11) Numéro de publication : **0 133 108**
**B1**

(12) **FASCICULE DE BREVET EUROPÉEN**

(45) Date de publication du fascicule du brevet :
09.09.87

(51) Int. Cl.⁴ : **B 01 J 23/76**, B 01 J 23/56,
C 10 G 45/06, C 10 G 45/10,
B 01 J 23/88

(21) Numéro de dépôt : 84401508.1

(22) Date de dépôt : 18.07.84

(54) Catalyseurs d'hydrotraitement d'hydrocarbures, leur préparation et leur application.

(30) Priorité : 19.07.83 FR 8311883

(43) Date de publication de la demande :
13.02.85 Bulletin 85/07

(45) Mention de la délivrance du brevet :
09.09.87 Bulletin 87/37

(84) Etats contractants désignés :
DE FR GB NL

(56) Documents cités :
FR-A- 2 016 820
FR-A- 2 174 958
FR-A- 2 291 958
FR-E-    93 655
GB-A- 1 196 411
GB-A- 1 311 473

(73) Titulaire : CENTRE NATIONAL DE LA RECHERCHE
SCIENTIFIQUE (CNRS)
15, Quai Anatole France
F-75007 Paris (FR)

(72) Inventeur : Ledoux, Marc-Jacques
11, rue d'Ussé
F-67000 Strasbourg-Robertsau (FR)
Inventeur : Maire, Gilbert
28, rue Kellermann
F-67500 Haguenau (FR)
Inventeur : Benazouz, Ramdane
5, rue Franche-Comté
F-67100 Strasbourg (FR)
Inventeur : Agostini, Giorgio
12, rue de l'Argonne
F-67000 Strasbourg (FR)

(74) Mandataire : Warcoin, Jacques et al
Cabinet Régimbeau 26, avenue Kléber
F-75116 Paris (FR)

## Description

La présente invention concerne de nouveaux catalyseurs d'hydrotraitement d'hydrocarbures. Dans l'ensemble de la description et des revendications du présent brevet, le terme « hydrocarbures » s'étendra de façon générale aux charges lourdes de matières carbonées, en particulier aux charges lourdes faiblement hydrogénées, par exemple les huiles lourdes d'origine pétrolière, ou encore les schistes bitumineux ou le charbon. L'invention concerne également la préparation de ces catalyseurs ainsi que les procédés d'hydrotraitement de charges d'hydrocarbures faisant intervenir lesdits catalyseurs.

L'hydrotraitement des hydrocarbures regroupe en fait plusieurs types de réactions, à savoir l'hydrogénation des hydrocarbures, l'hydrodésazotation, l'hydrodésulfuration, l'hydrodésoxygénation et l'hydrodémétallation. A ce jour, l'hydrodésulfuration a été très largement étudiée, principalement en raison du fait que les fractions légères d'hydrocarbures généralement exploitées renfermaient des composés sulfurés (mercaptans) dont il fallait se débarrasser. Ces composés sulfurés sont en effet responsables d'un certain nombre d'inconvénients graves, tels que l'empoisonnement des catalyseurs avals de reformage et le dégagement d'oxydes de soufre à la combustion.

Les charges lourdes d'hydrocarbures qui sont et vont encore être de plus en plus exploitées, qu'il s'agisse d'huiles lourdes d'origine pétrolière, de schistes bitumineux ou de charbon, renferment des proportions importantes atteignant 3 % de composés azotés aromatiques dérivés de la pyridine. Ces produits basiques sont à la fois des poisons pour les catalyseurs avals de crackage catalytique acide et des produits dangereux responsables de la formation d'oxydes d'azote à la combustion. Ils sont en outre eux-mêmes cancérigènes.

Jusqu'ici, l'industrie se débarrassait partiellement de ces composés azotés en utilisant des catalyseurs classiques de désulfuration, mais avec la contrainte de se placer dans des conditions de pression et de température très sévères, et donc néfastes à la durée de vie des catalyseurs et à l'économie du procédé.

L'état de la technique peut notamment être illustré par GB-A-1 196 411, FR-E-93 655 et GB-A-1 311 473 décrivant des catalyseurs d'hydrodésulfuration, contenant de l'uranium et un métal du groupe VIII sur un support minéral réfractaire.

La présente invention a donc eu pour but la mise au point de nouveaux catalyseurs d'hydrotraitement mieux adaptés à une bonne hydrodésazotation et hydrodésoxygénation d'hydrocarbures, et en particulier des phases lourdes, tout en conservant une bonne thiorésistance et en présentant une résistance améliorée à l'empoisonnement métallique.

La présente invention concerne un nouveau catalyseur d'hydrotraitement d'hydrocarbures qui est caractérisé en ce qu'il comporte un support minéral réfractaire combiné à une phase active comprenant d'une part une couche d'oxyde d'uranium et d'autre part au moins un oxyde d'un métal du groupe VIII.

Selon une caractéristique essentielle de l'invention, la phase active du catalyseur comprend une couche d'oxyde d'uranium fixée avec une répartition homogène sur ledit support par l'intermédiaire de liaisons directes —O— résultant d'une imprégnation du support à l'aide d'une solution éthanolique d'acétylacétonate d'uranyle.

D'autres caractéristiques et avantages de la présente invention apparaîtront à la lecture de la description détaillée faite ci-après notamment en référence à quelques exemples particuliers fournis à simple titre d'illustration.

Le support minéral réfractaire du catalyseur selon l'invention est de type classique. Il est par exemple constitué par différentes variétés d'alumine, telle que l'alumine $\gamma$, des aluminosilicates, des silices, des silices-alumines, des zéolithes ainsi que des mélanges de ces différents produits.

Conformément à la présente invention, le support minéral réfractaire est combiné à une phase active comprenant une couche d'oxyde d'uranium à titre de composant de base.

Le composant de base généralement utilisé dans la phase active des catalyseurs d'hydrodésulfuration est le molybdène, métal stratégique dont un grand nombre de pays sont largement dépourvus. Son remplacement par l'uranium, métal beaucoup plus courant notamment en terme français, conduit à une excellente activité de déshydrodésazotation du catalyseur. En outre, l'utilisation d'uranium dont le volume atomique est plus grand que celui du molybdène, conduit à un catalyseur doté d'une bien meilleure résistance à l'empoisonnement métallique.

Selon le procédé objet de la présente invention, on dépose l'uranium sur le support minéral réfractaire par imprégnation d'une solution éthanolique anhydre d'un complexe organo-métallique, l'acétylacétonate d'uranyle. Ce complexe peut être obtenu très facilement et avec d'excellents rendements par réaction de nitrate d'uranyle $UO_2(NO_3)_2$ avec de l'acétylacétone $C_5H_8O_2$, et précipitation du complexe par addition progressive d'un carbonate, tel que le carbonate de potassium.

Si l'on opère en présence d'un excès d'environ 10 % d'acétylacétone on obtient l'acétylacétonate avec un rendement supérieur à 99 %.

Un tel mode de dépôt de l'uranium sur le support conduit à une phase active de base du catalyseur se présentant sous la forme d'une couche en épitaxie sur le support, très vraisemblablement une monocouche d'oxyde d'uranium fixée au support par l'établissement de liaisons chimiques directes, par

2

exemple U-O-Al, et avec une répartition parfaitement homogène. Il convient d'ailleurs de noter que cette bonne dispersion ainsi obtenue conduit à une forte amélioration de la stabilité du catalyseur vis-à-vis du soufre et donc à une meilleure thiorésistance du catalyseur.

Pour faciliter la fixation de la monocouche d'oxyde d'uranium sur le support minéral réfractaire, on choisira un support portant des groupements hydroxyle acides. On utilise par exemple de l'alumine γ qui conduit à d'excellents résultats dans la pratique. Avantageusement, le support est soumis à un traitement thermique préalable en vue d'assurer son activation et sa déshydratation partielle. Ce traitement peut par exemple consister dans le cas particulier de l'alumine γ, en une calcination oxydante à l'air pendant deux heures à une température de l'ordre de 600 °C.

Conformément à la présente invention, on obtient ainsi des catalyseurs dont la phase active contient de 5 à 35 % en poids d'uranium, rapporté au poids total du catalyseur.

L'uranium de la phase active du catalyseur doit en outre être associé à au moins un autre métal du groupe VIII, de préférence choisi parmi le fer, le cobalt, le nickel et le ruthénium.

Le catalyseur objet de la présente invention contient de préférence 0,1 à 10 % en poids de fer, de cobalt, de nickel et/ou de ruthénium, rapporté au poids total du catalyseur.

Après fixation, de la phase active uranium sur le support, séchage et calcination, on procède ensuite à l'imprégnation du second métal par toute méthode adaptée. Pour effectuer cette seconde fixation de métal, il est à nouveau possible de faire appel à toute méthode d'imprégnation classique dans le domaine des catalyseurs. Il est par exemple possible de préparer un catalyseur à base de nickel et d'uranium en procédant à une seconde imprégnation à l'aide d'une solution anhydre d'un complexe organo-métallique, tel que l'acétylacétonate de nickel. Dans la pratique, on choisira avantageusement un solvant hydrocarboné chloré, tel que le dichlorométhane, qui permet d'assurer une bonne solubilisation du complexe organo-métallique et par suite une imprégnation satisfaisante.

Il est bien sûr également possible d'effectuer la seconde imprégnation par des méthodes plus classiques, en particulier par la méthode dite du volume poreux à partir d'une solution aqueuse de nitrate de métal du groupe VIII, par exemple à partir d'une solution basique de nitrate de nickel hydraté. L'imprégnation est alors réalisée de préférence sous forte agitation.

Dans certains cas particuliers, il est préférable de choisir la méthode du volume poreux pour l'imprégnation du second métal à partir de son nitrate. Cela permet notamment d'éviter la présence de chlore sur le catalyseur qui subirait ainsi une modification de ses propriétés acides.

Après la seconde imprégnation, le catalyseur est séché par exemple pendant 1 heure à 120 °C, puis traité à 500 °C pendant deux heures supplémentaires à l'air.

Le catalyseur objet de la présente invention peut en outre contenir différents dopants incorporés par des procédés classiques. A titre de simple exemple on mentionnera l'incorporation d'oxydes de terres rares, telles que le cérium et le samarium. Ces dopants seront généralement présents à raison d'environ 0,2 à 2 % en poids, rapporté au poids total du catalyseur.

La présente invention se rapporte également à des procédés d'hydrotraitement de charges d'hydrocarbures, en particulier à des charges lourdes destinées à être désazotées. Ces procédés consistent à traiter classiquement les charges d'hydrocarbures par de l'hydrogène en présence d'un catalyseur tel que défini précédemment.

A tire de simple illustration, on indiquera ci-après quelques exemples illustrant les conditions opératoires pour la préparation de catalyseurs contenant, conformément à l'invention, une phase active à base d'uranium.

### Exemple 1

Préparation de l'acétylacétonate d'uranyle :

20 grammes de nitrate d'uranyle $UO_2(NO_3)_2$ sont dissous dans 25 ml d'eau distillée à une température de 40 °C. La solution est jaune phosphorescente. On ajoute à cette solution 11 g d'acétylacétone. On maintient la solution réactionnelle sous agitation à 40 °C (solution rouge foncé) et l'on ajoute progressivement une quantité stœchiométrique de carbonate de potassium à cette solution rouge. Cette addition de carbonate s'accompagne d'un fort dégagement de dioxyde de carbone et le complexe jaune d'acétylacétonate d'uranyle précipite au fur et à mesure de sa formation, étant donné qu'il est très peu soluble dans l'eau. Le produit ainsi obtenu est filtré, puis lavé à l'eau pour éliminer le nitrate de potassium et à l'éther de pétrole pour éliminer les traces d'acétylacétone. Enfin, le produit est séché par pompage sous vide. Lorsque l'on opère en présence d'un excès d'environ 10 % d'acétylacétone, on atteint un rendement supérieur à 99 %.

### Exemple 2

Préparation du catalyseur $UO_x/Al_2O_3$ ($2 \leqslant x \leqslant 3$)

On dissout 5,4 g d'acétylacétone d'uranyle dans 10 ml d'éthanol absolu. On prépare le support de catalyseur de façon séparée. 10 g d'alumine γ (Ketjen® CK 300) sont broyés et tamisés en particules de 0,2 à 0,5 mm, puis calcinés à l'air pendant deux heures à 600 °C. On obtient ainsi une alumine ayant une surface spécifique de 217 m²/g et un volume poreux de 0,62 g/cm³. Cette alumine est ensuite mouillée avec 20 ml d'éthanol absolu.

La solution éthanolique d'acétylacétonate d'uranyle est alors additionnée à 20 °C (rinçage du récipient avec 2 ml d'éthanol absolu) et ce mélange est laissé au repos pendant environ 15 heures.

Le solvant est alors chassé à l'évaporateur rotatif 35 °C, 14 Torr) et l'on récupère 16,26 g de poudre jaune-orange vif. Cette poudre est alors séchée à l'étuve à 120 °C pendant 1 heure, ce qui conduit à 13,64 g de poudre qui est ensuite placée dans un four à 500 °C sous air pendant deux heures. La poudre est ensuite sortie du four pour être refroidie rapidement à la température ambiante. On obtient ainsi 12,47 g de catalyseur $UO_x/Al_2O_3$ de couleur orange.

## Exemple 3

Préparation du catalyseur $RuO_4$-$UO_x/Al_2O_3$ $(2 \leqslant x \leqslant 3)$

On dissout 0,121 g d'acétylacétonate de ruthénium dans 20 ml d'éthanol chaud, puis on ajoute à cette solution 2,5 g du catalyseur $UO_x/Al_2O_3$ obtenu à l'exemple 2. Le mélange est laissé deux heures au repos, puis le solvant est extrait à l'évaporateur rotatif. La poudre obtenue est ensuite séchée à 120 °C pendant 1 heure, puis traitée à 500 °C à l'air pendant deux heures. On obtient ainsi 2,50 g de catalyseur se présentant sous la forme d'une poudre gris très sombre, presque noir. Ce catalyseur contient sensiblement 0,2 % en poids de $RuO_4$ et 20 % en poids de $UO_3$.

## Exemple 4

Préparation du catalyseur $NiO$-$UO_x/Al_2O_3$ $(2 \leqslant x \leqslant 3)$

On dissout 0,7 g de nitrate de nickel hydraté dans 3,5 ml d'eau ammoniaquée (pH 11). Cette solution est additionnée sous forte agitation à 5 g du catalyseur $UO_x/Al_2O_3$ obtenu à l'exemple 2. On laisse le mélange au repos pendant 15 heures, on sèche à 120 °C pendant 1 heure puis on traite à 500 °C pendant deux heures à l'air. On récupère ainsi 5,11 g de catalyseur sous la forme d'une poudre gris-vert. Le catalyseur obtenu contient sensiblement 3 % en poids de $NiO$ et 19,6 % en poids de $UO_3$.

Des analyses chimiques effectuées au micropilote en laboratoire ont permis de mettre en évidence une excellente activité de désazotation de la pyridine et de la pipéridine, ainsi qu'une bonne activité de désulfuration du thiophène.

Les résultats de cette étude comparative ont été portés dans le Tableau I figurant ci-après. Dans ce tableau, les catalyseurs testés sont symbolisés par les références ayant les significations suivantes :

NX 320 AC ⎤  
NX 412 AC ⎪            catalyseurs selon l'invention à base d'uranium  
NX 512 AC ⎬            et de nickel préparés par imprégnation du  
NX 712 AC ⎦            support à l'aide d'une solution éthanolique  
                                            d'acétylacétonate d'uranyle.

NiMo(N4) ⎤            catalyseurs classiques à base de nickel et de  
NiMo(N12) ⎬                                    molybdène.  
NiMo(N7) ⎦

NMX ⎤            catalyseurs selon l'invention, dopés par du  
CMX ⎦                                    molybdène.

L'activité HDN mentionnée dans le tableau I correspond à la réaction d'hydrodésazotation de la pyridine sur la phase soufrée. Les conditions de réaction d'HDN sont les suivantes :

Le catalyseur est placé sous 1 atmosphère d'$H_2S/H_2$ à 2 %, flux 100 ml/min. puis la température est montée à 450 °C (présulfuration), il est maintenu à 450 °C pendant 1 h, puis redescendu à 400 °C, placé sous $H_2$ pur pendant 15 h (réduction). Le catalyseur est retraité pendant 1 h à 450 °C sous $H_2S/H_2$ (sulfuration finale), puis replacé sous $H_2$ pur pendant 2 h (élimination de l'$H_2S$ n'ayant pas réagi et chimisorbé sur les sites réactionnels).

Température de réaction : 450 °C sous 1 atm d'$H_2$ pur, 100 ml/min. et pression constante de pyridine 566,62 Pa débit 1 à 6 μl/min.

Analyse à l'état stationnaire.

L'activité HDN est exprimée en $10^{-11}$ · moles de pyridine transformées en hydrocarbures et ammoniac par seconde et par gramme de catalyseur.

L'activité HDS mentionnée dans le tableau I correspond à la réaction d'hydrodésulfuration de thiophène sur la phase soufrée. Les conditions de réaction d'HDS sont les suivantes :

Réactions faites à la suite des réactions d'HDN de la pyridine rapportées précédemment, c'est-à-dire sur catalyseurs ayant subi le traitement de présulfuration.

La température de réaction est de 275 °C, sous 1 atm. d'$H_2$, débit de 100 à 250 ml/min., pression constante de thiophène 799,93 Pa, débit de 1 à 6 $\mu$l/min. afin de maintenir des conversions équivalentes sur tous les catalyseurs. Mesures effectuées à l'état stationnaire.

L'activité HDS est exprimée en $10^{-11} \cdot$ moles de thiophène transformées par seconde et par gramme de catalyseur.

Il convient de noter que les deux derniers catalyseurs, à savoir NMX et CMX ont été dopés par du molybdène. Selon une caractéristique particulière de la présente invention, les catalyseurs peuvent en effet être dopés par 0,2 à 3,5 % de molybdène. Ces catalyseurs sont obtenus par exemple par co-imprégnation du support à l'aide d'une solution d'acétylacétonatè d'uranyle et d'acétylacétonate de molybdène $MoO_2$ (Acac)$_2$.

On fera en outre observer que la vitesse moyenne d'HDN diminue pour tous les catalyseurs par rapport à celle de la réaction sur la phase oxyde ; mais cette diminution de la vitesse d'HDN est environ 5 fois moindre dans le cas des catalyseurs selon l'invention que pour les catalyseurs classiques à base de nickel et de molybdène. Les catalyseurs selon l'invention sont donc bien plus résistants à l'égard du phénomène d'empoisonnement dû au soufre. En outre, on a observé que l'activité HDN en phase soufrée des catalyseurs selon l'invention à base d'uranium augmente en fonction de la teneur en nickel. Une telle évolution n'est pas observée pour les catalyseurs classiques à base de nickel et de molybdène.

On constate enfin que l'activité HDS est améliorée par dopage au molybdène des catalyseurs selon l'invention.

Dans les deux dernières colonnes du tableau I figurent les activités HDN et HDS rapportées à 1 g de phase active, c'est-à-dire à 1 g de $MoO_3$ + NIO. Ces activités HDN et HDS sont exprimées en $10^{-11} \cdot$ moles respectivement de pyridine et de thiophène, transformées par seconde et par gramme de phase active.

Tableau 1

| Catalyseurs | % poids Ni | % poids U | % poids Co | % poids Mo | activité HDN | activité HDS | Activité rapportée à 1g de MoO$_3$ + NiO (phase active) | |
|---|---|---|---|---|---|---|---|---|
| | | | | | | | HDN | HDS |
| NX 320 AC | 2,41 | 16,24 | 0 | 0 | 131 | ( – ) | | |
| NX 412 AC | 3,72 | 12,03 | 0 | 0 | 135 | 7060 | | |
| NX 512 AC | 5,35 | 11,77 | 0 | 0 | 308 | 8400 | | |
| NX 712 AC | 7,26 | 11,59 | 0 | 0 | 347 | 10020 | | |
| NiMo(N4) | 2,24 | 0 | 0 | 6,68 | (–) | 73350 | (–) | 569 930 |
| NiMo(N12) | 2,20 | 0 | 0 | 7,44 | 259 | ( – ) | 1854 | (–) |
| NiMo(N7) | 5,57 | 0 | 0 | 7,72 | 199 | 74283 | 1066 | 397 870 |
| NMX A | 2,92 | 11,53 | 0 | 3,41 | 220 | 27200 | 2500 | 125 350 |
| CMX A | 0 | 11,53 | 2,73 | 3,41 | 323 | 15170 | 3660 | 67 540 |
| NMX B | 0,5 | 10 | 0 | 2 | 274 | 18890 | 7538 | 519 610 |
| CMX B | 0 | 10 | 0,5 | 2 | 256 | 7000 | 7050 | 192 350 |

(—) non déterminée

0 133 108

**Revendications**

1. Catalyseur d'hydrotraitement d'hydrocarbures, du type comportant un support minéral réfractaire combiné à une phase active comprenant d'une part une couche d'oxyde d'uranium et d'autre part au moins un oxyde d'un métal du groupe VIII, caractérisé en ce que ladite phase active comprend une couche d'oxyde d'uranium fixée avec une répartition homogène sur ledit support par l'intermédiaire de liaisons directes —O— résultant d'une imprégnation du support à l'aide d'une solution éthanolique d'acétylacétonate d'uranyle.

2. Catalyseur selon la revendication 1, caractérisé en ce que ledit métal du groupe VIII est choisi parmi le fer, le cobalt, le nickel et le ruthénium.

3. Catalyseur selon l'une des revendications 1 et 2, caractérisé en ce que ladite phase active contient 5 à 35 % en poids d'uranium, rapporté au poids total du catalyseur.

4. Catalyseur selon l'une des revendications 1 à 3, caractérisé en ce qu'il contient 0,1 à 10 % en poids de fer, de cobalt, de nickel et/ou de ruthénium, rapporté au poids total du catalyseur.

5. Catalyseur selon l'une des revendications 1 à 4, caractérisé en ce qu'il est dopé par 0,2 à 2 % en poids d'oxyde de terres rares, telles que le cérium et le samarium, rapporté au poids total du catalyseur.

6. Catalyseur selon l'une des revendications 1 à 5, caractérisé en ce qu'il est dopé par 0,2 à 3,5 % en poids de molybdène, rapporté au poids total du catalyseur.

7. Procédé de préparation d'un catalyseur selon l'une des revendications 1 à 6, caractérisé en ce que l'on procède au dépôt de l'uranium sur un support minéral réfractaire par imprégnation dudit support à l'aide d'une solution éthanolique anhydre du complexe acétylacétonate d'uranyle, suivi d'une imprégnation en soi connue, à l'aide d'un métal du groupe VIII.

8. Procédé de préparation selon la revendication 7, caractérisé en ce que ledit complexe acétylacétonate d'uranyle est obtenu par réaction de nitrate d'uranyle et d'acétylacétone, et précipitation du complexe par addition d'un carbonate, tel que le carbonate de potassium.

9. Procédé selon l'une des revendications 7 et 8, caractérisé en ce que le support minéral réfractaire porte des groupements hydroxyle acides.

10. Procédé selon l'une des revendications 7 à 9, caractérisé en ce qu'après l'imprégnation du support, le solide obtenu par évaporation est séché entre 100 et 200 °C, de préférence à environ 120 °C, puis calciné à l'air entre 400 et 600 °C.

11. Procédé d'hydrotraitement d'hydrocarbures par catalyse hétérogène, caractérisé en ce que l'on utilise un catalyseur selon l'une des revendications 1 à 6.

**Claims**

1. Catalyst for the hydrotreatment of hydrocarbons, of the type comprising a resistant inorganic support combined with an active phase comprising on the one hand a layer of uranium oxide and on the other hand at least one oxide of a metal of group VIII, characterised in that the said active phase comprises a layer of uranium oxide bonded in uniform distribution to the said support by means of direct —O— bonds resulting from impregnation of the support with the aid of an ethanolic solution of uranyl acetylacetonate.

2. Catalyst according to claim 1, characterised in that said metal of group VIII is selected from iron, cobalt, nickel and ruthenium.

3. Catalyst according to one of claims 1 and 2, characterised in that said active phase contains 5 to 35 % by weight of uranium, based on the total weight of the catalyst.

4. Catalyst according to one of claims 1 to 3, characterised in that it contains 0.1 to 10 % by weight of iron, cobalt, nickel and/or ruthenium, based on the total weight of the catalyst.

5. Catalyst according to one of claims 1 to 4, characterised in that it is doped with 0.2 to 2 % by weight of an oxide of the rare earths, such as cerium and samarium, based on the total weight of the catalyst.

6. Catalyst according to one of claims 1 to 5, characterised in that it is doped with 0.2 to 3.5 % by weight of molybdenum, based on the total weight of the catalyst.

7. Process for the preparation of a catalyst according to one of claims 1 to 6, characterised in that a procedure is followed in which the uranium is deposited on to a resistant inorganic support by impregnation of said support with the aid of an anhydrous ethanolic solution of the complex uranyl acetylacetonate, and the support is then impregnated in a manner which is known per se with the aid of a metal of group VIII.

8. Preparation process according to claim 7, characterised in that said complex uranyl acetylacetonate is obtained by reaction of uranyl nitrate and acetylacetone and precipitation of the complex by addition of a carbonate, such as potassium carbonate.

9. Process according to one of claims 7 and 8, characterised in that the resistant inorganic support carries acidic hydroxyl groups.

10. Process according to one of claims 7 to 9, characterised in that after the impregnation of the support, the solid obtained by evaporation is dried at between 100 and 200 °C, preferably at about 120 °C, and then calcined in air at between 400 and 600 °C.

11. Process for the hydrogen treatment of hydrocarbons by heterogeneous catalysis, characterised in that a catalyst according to one of claims 1 to 6 is used.

**Patentansprüche**

1. Katalysator für die Wasserstoffbehandlung von Kohlenwasserstoffen der Art mit einem feuerfesten mineralischen Träger kombiniert mit einer aktiven Phase, welche einerseits eine Uran-Oxidschicht und andererseits mindestens ein Oxid eines Metalls der Gruppe VIII aufweist, dadurch gekennzeichnet, daß die genannte aktive Phase eine Uranoxidschicht aufweist, welche mit einer homogenen Verteilung auf dem genannten Träger mittels direkter O-Bindungen, entstanden aus einer Imprägnierung des Trägers mittels ethanolischer Lösung von Uranyl-Acetylacetonat, fixiert ist.

2. Katalysator nach Anspruch 1, dadurch gekennzeichnet, daß das besagte Metall aus der Gruppe VIII unter Eisen, Kobalt, Nickel und Ruthenium ausgewählt ist.

3. Katalysator nach Anspruch 1 oder 2, dadurch gekennzeichnet, daß besagte aktive Phase 5 bis 35 Gew.-% Uran bezogen auf das Gesamtgewicht des Katalysators enthält.

4. Katalysator nach einem der Ansprüche 1 bis 3, dadurch gekennzeichnet, daß er 0,1 bis 10 Gew.-% Eisen, Kobalt, Nickel und/oder Ruthenium bezogen auf das Gesamtgewicht des Katalysators enthält.

5. Katalysator nach einem der Ansprüche 1 bis 4, dadurch gekennzeichnet, daß er mit 0,2 bis 2 Gew.-% eines Oxides der seltenen Erden wie Cer und Samarium, bezogen auf das Gesamtgewicht des Katalysators dotiert ist.

6. Katalysator nach einem der Ansprüche 1 bis 5, dadurch gekennzeichnet, daß er mit 0,2 bis 3,5 Gew.-% Molybden bezogen auf das Gesamtgewicht des Katalysators dotiert ist.

7. Verfahren zum Herstellen eines Katalysators nach einem der Ansprüche 1 bis 6, dadurch gekennzeichnet, daß man vorbereitend zur Ablagerung von Uran auf einem feuerfesten, mineralischen Träger diesen mittels einer wasserfreien ethanolischen Lösung des Komplexes Uranyl-Acetylacetonat imprägniert und anschließend eine an sich bekannte Imprägnation mittels eines Metalls aus der Gruppe VIII vornimmt.

8. Verfahren zum Herstellen nach Anspruch 7, dadurch gekennzeichnet, daß der besagte Komplex Uranyl-Acetylacetonat durch Reaktion von Uranyl-Nitrat und Acetylaceton und durch Ausfällen des Komplexes durch Zugabe eines Karbonats, wie Kaliumkarbonat, erhalten wird.

9. Verfahren nach Anspruch 7 oder 8, dadurch gekennzeichnet, daß der feuerfeste mineralische Träger saure Hydroxylgruppen aufweist.

10. Verfahren nach einem der Ansprüche 7 bis 9, dadurch gekennzeichnet, daß der nach der Imprägnierung des Trägers durch Verdampfen erhaltene Feststoff bei einer Temperatur zwischen 100 und 200 °C, vorzugsweise bei etwa 120 °C, getrocknet und anschließend an der Luft bei 400 bis 600 °C gebrannt wird.

11. Verfahren zur Wasserstoffbehandlung von Kohlenwasserstoffen durch heterogene Katalyse, dadurch gekennzeichnet, daß man einen Katalysator nach einem der Ansprüche 1 bis 6 anwendet.